# EUROPÄISCHE PATENTSCHRIFT

(11) **EP 1 935 545 B1**
(45) Veröffentlichungstag und Bekanntmachung des Hinweises auf die Patenterteilung: **22.05.2013**
(21) Anmeldenummer: 07121108.0
(22) Anmeldetag: 20.11.2007
(51) Int. Cl.: B23H 7/26, B23H 9/00, B23H 9/14

(54) **Vorrichtung zur elektroerosiven Herstellung von Bohrungen**
Device for electro-erosive boring
Dispositif destiné à la fabrication électro-érosive de forages

(30) Priorität: 22.12.2006 DE 102006061245
(43) Veröffentlichungstag der Anmeldung: 25.06.2008
(73) Patentinhaber: ROBERT BOSCH GMBH, 70442 Stuttgart (DE)
(72) Erfinder: Schramm, Gerda, 96169, Lauter (DE); Alt, Erhard, 96117, Memmelsdorf (DE); Ulm, Heinz, 91358, Kunreuth (DE)

(56) Entgegenhaltungen:
- EP-A2- 1 647 347
- FR-A1- 2 492 711

## Beschreibung

Die Erfindung betrifft eine Vorrichtung zum elektroerosiven Herstellen von Bohrungen in metallischen Werkstücken, vorzugsweise von Einspritzbohrungen in Einspritzventilen für Brennkraftmaschinen.

### Stand der Technik

Die Erfindung geht von einer Vorrichtung zum elektroerosiven Herstellen von Bohrungen aus, wie sie beispielsweise aus der Offenlegungsschrift DE 10 2004 050 049 A1 bekannt ist. Vorrichtungen zum elektroerosiven Herstellen von Bohrungen sind im Stand der Technik schon seit langer Zeit bekannt. Eine besondere Bedeutung hat dieses Verfahren bei der Fertigung von sehr kleinen Bohrungen in Einspritzventilen für Brennkraftmaschinen, wobei der Kraftstoff unter hohem Druck durch diese Bohrungen gepresst wird, die einen Durchmesser von nur etwa 100 µm aufweisen.

Um solche Bohrungen herzustellen sind äußerst feine Erodierdrähte nötig und eine sehr fein dosierbare Vorschubeinrichtung, mit der der Erodierdraht, zwischen dem und dem Werkstück eine elektrische Spannung anliegt, sehr präzise und genau geregelt an das Werkstück herangeführt werden kann.
Die DE 10 2004 050 049 A1 schlägt hierzu eine Vorrichtung vor, die einerseits aus einer Grobschubvorrichtung besteht, die zwei den Erodierdraht klemmende Antriebsrollen umfasst, und einer zweiten Feinvorschubeinrichtung, die einen Klemmmechanismus aufweist, mit der der Erodierdraht eingeklemmt und durch einen Piezoantrieb vor- oder zurückbewegt werden kann. Die hier vorgeschlagene Vorrichtung ist jedoch sehr aufwendig, da ein Klemmmechanismus zusätzlich zu den Antriebsrollen vorhanden sein muss, was entsprechend teuer ist. Darüber hinaus müssen besondere Vorkehrungen getroffen werden, um einen elektrischen Spannungsüberschlag zwischen dem Erodierdraht und der Klemmvorrichtung zu verhindern.

### Vorteile der Erfindung

Die erfindungsgemäße Vorrichtung zum elektroerosiven Herstellen von Bohrungen weist demgegenüber den Vorteil auf, dass eine exakte und äußerst schnelle Bewegung des Erodierdrahts möglich ist und damit eine sehr exakte Herstellung von Bohrungen, wie sie insbesondere für Einspritzventile notwenig sind, die zur Einspritzung von Kraftstoff in selbstzündende Brennkraftmaschinen notwendig sind. Hierzu wird der Erodierdraht mit zwei Antriebsrollen geklemmt, die entgegengesetzt drehen und dadurch den Erodierdraht vor- bzw. zurückziehen. Die Antriebsrollen werden hierbei vorzugsweise durch Elektromotoren angetrieben und sind auf einer Haltevorrichtung montiert, die wiederum mit einer Stelleinrichtung verbunden ist, die einen Piezoaktor umfasst. Durch geeignete Bestromung des Piezoaktors kann die Stelleinrichtung betätigt werden und damit die Haltevorrichtung inklusive der Antriebsrollen vor- und zurückbewegt werden, so dass ein äußerst schnelles Vor- und Zurückziehen des Erodierdrahts möglich ist und eine entsprechend exakte Steuerung des Abstands zwischen Erodierdrahtspitze und Werkstück. Für einen genauen Abtrag, der durch Funkenerosion zwischen der Spitze des Erodierdrahts und dem Werkstück geschieht, ist die genaue Abstandsregelung zwischen der Erodierdrahtspritze und dem Werkstück essentiell, und bereits winzige Abweichungen vom idealen Abstand führen dazu, dass die Bohrung nicht exakt gefertigt wird und aufwendige Nacharbeiten notwendig werden.

In einer vorteilhaften Ausgestaltung des Gegenstandes der Erfindung wird der Erodierdraht elektrisch mit einer Spannungsquelle verbunden, wobei die elektrische Kontaktierung über die Antriebsrollen erfolgt. Da die ohnehin vorhandenen Antriebsrollen die elektrische Kontaktierung übernehmen, kann auf eine gesonderte Kontaktierung des Erodierdrahts verzichtet werden, so dass sich die Anlage kostengünstiger herstellen lässt. Darüber hinaus weist diese Kontaktierung den Vorteil auf, dass die Spannung relativ nahe an der Erodierdrahtspitze eingeleitet wird, was die elektrischen Verluste innerhalb des Erodierdrahts mindert.

In einer weiteren vorteilhaften Ausgestaltung ist die Haltevorrichtung als Trägerarm ausgebildet, der an einem Ende drehbar gelagert ist und an dessen gegenüberliegendem Ende die Antriebsrollen angebracht sind. Ein solchermaßen ausgestalteter Trägerarm lässt sich vorteilhafter Weise zwischen dem drehbar gelagerten Ende und den Antriebsrollen mit der Stelleinrichtung verbinden, was darüber hinaus den Vorteil bietet, dass über die Hebelwirkung der Hub des Piezoaktors verstärkt wird.

Falls die Regelhübe klein sind, was in der Regel der Fall ist, kann es auch in vorteilhafter Weise vorgesehen sein, dass der Trägerarm an seiner den Antriebsrollen gegenüberliegenden Ende fest eingespannt ist. Die Stelleinrichtung übt in diesem Fall ein Biegemoment auf den Trägerarm aus, so dass die Antriebsrollen entsprechend bewegt werden, wobei der Trägerarm stets nur elastisch verformt wird.

### Zeichnung

In der Zeichnung ist schematisch eine erfindungsgemäße Vorrichtung zum Elektroerodieren dargestellt.
- Figur 1: zeigt eine Aufsicht auf die Erodiervorrichtung mit allen wesentlichen Komponenten in schematischer Darstellung und
- Figur 2: eine Draufsicht gemäß der im Schnitt II-II der Figur 1 auf die Antriebsrollen.

### Beschreibung des Ausführungsbeispiels

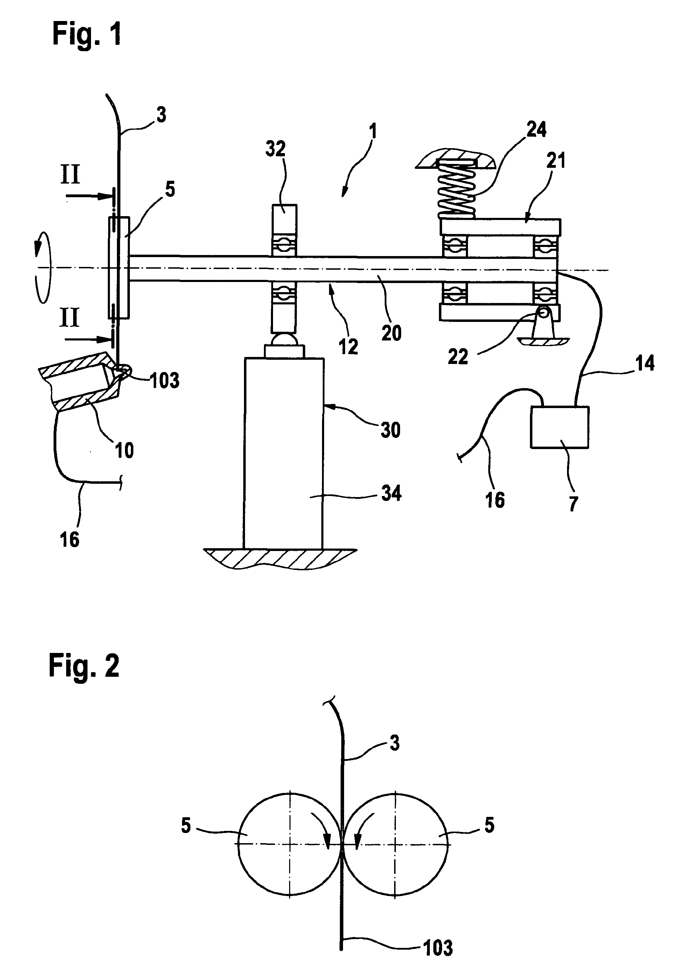

In Figur 1 ist eine erfindungsgemäße Erodiervorrichtung dargestellt. Die Erodiervorrichtung 1 umfasst einen Erodierdraht 3, der durch zwei aneinander anliegende Antriebsrollen 5 mit seiner Erodierdrahtspitze 103 an ein Werkstück 10 angenähert werden kann. Figur 2 zeigt hierzu eine Draufsicht auf die beiden Antriebsrollen 5, die, wenn sie sich wie eingezeichnet gegensinnig drehen, die Erodierdrahtspitze 103 an ein Werkstück annähern. Die Antriebsrollen 5 sind auf einer Haltevorrichtung 12 montiert, die einen Trägerarm 20 umfasst. Der Trägerarm 20 trägt auf seinem einen Ende die beiden Antriebsrollen 5 und ist mit seinem gegenüberliegenden Ende in einer Einspannvorrichtung 21 eingespannt, wobei die Einspannvorrichtung 21 an einem Lager 22 drehbar gelagert ist. Hierdurch kann der gesamte Trägerarm 20 um das Lager 22 geschwenkt werden, so dass durch die Schwenkbewegung des Trägerarms 20 ebenfalls die Erodierdrahtspitze 103 auf das Werkstück zu oder vom Werkstück wegbewegt werden kann.

Zwischen den Antriebsrollen 5 und der Einspannvorrichtung 21 ist eine Einspannung 32 ausgebildet, die an einer Stelleinrichtung 30 aufliegt. Hierbei wird über eine Spannfeder 24, die an der Einspannvorrichtung 21 angreift, sichergestellt, dass der Trägerarm 20 über die Einspannung 32 stets an der Stelleinrichtung 30 formschlüssig anliegt. Die Stelleinrichtung 30 umfasst einen Piezoaktor 34, der durch das Anlegen einer geeigneten Spannung eine Längenänderung bewirkt, so dass der Trägerarm 20 über den Piezoaktor um das Lager 22 leicht verschwenkt werden kann. Um den Erodiervorgang starten zu können, muss zwischen dem Erodierdraht 3 und dem Werkstück 10 eine geeignete elektrische Spannung angelegt werden. Diese wird durch eine Spannungsquelle 7 erzeugt, die mit einer ersten elektrischen Leitung 14 mit dem Erodierdraht 3 verbunden ist. Hierbei ist eine elektrische, in der Zeichnung nicht dargestellte Leitung durch den Trägerarm 20 geführt und mit den Antriebsrollen 5 kontaktiert, die metallisch ausgeführt sind, so dass über die Antriebsrollen 5 die elektrische Kontaktierung mit dem Erodierdraht 3 erfolgt. Die zweite elektrische Leitung 16 ist mit dem metallischen Werkstück 10 verbunden, das hier exemplarisch als Spitze eines Einspritzventils dargestellt ist, wie es für die Einspritzung von Kraftstoff in die Brennräume von selbstzündenden Brennkraftmaschinen verwendet wird.

Die erfindungsgemäße Erodiervorrichtung funktioniert wie folgt: Zwischen dem Erodierdraht 3 und dem Werkstück 10 wird über die Spannungsquelle 7 eine geeignete elektrische Spannung angelegt. Durch das Drehen der Antriebsrollen 5 wird die Erodierdrahtspitze 103 soweit an das Werkstück 10 angenähert, dass ein Funken vom Werkstück 10 zur Erodierdrahtspitze 3 überspringen kann, was den gewünschten Materialabtrag am Werkstück 10 bewirkt. Die Antriebsrollen 5 werden über einen Elektromotor angetrieben, so dass deren Bewegung relativ träge ist. Für einen exakten Erodierprozess ist jedoch ein genau geregelter Abstand zwischen dem Werkstück und der Erodierdrahtspitze 103 unabdingbar. Nähert sich die Erodierdrahtspitze 103 zu nahe an das Werkstück ran, steigt der Erodierstrom zwischen der Erodierdrahtspitze 103 und dem Werkstück 10 stark an, so dass dieser erhöhte Erodierstrom als Regelsignal für die Ansteuerung der Stelleinrichtung 30 verwendet werden kann. Durch eine Verlängerung des Piezoaktors 34 wird der Trägerarm 20 angehoben und um das Lager 22 verschwenkt, so dass die Erodierdrahtspitze 103 rasch zurückgezogen wird und der Erodierstrom entsprechend reduziert wird. Umgekehrt kann bei einem zu starken Abfall des Erodierstroms über eine Verkürzung des Piezoaktors 34 eine weitere Annäherung der Erodierdrahtspitze 103 in sehr kurzer Zeit an das Werkstück 10 erreicht werden, so dass mit einer entsprechenden Ansteuerung der Antriebsrollen und der Stelleinrichtung der Erodierstrom konstant bleibt. Durch das Zusammenspiel der Antriebsrollen 5 und der Stelleinrichtung 30 lässt sich so mit relativ geringem Aufwand eine exakte Regelung des Abstands zwischen Erodierdrahtspitze 103 und Werkstück 10 erreichen und damit entsprechend exakte Bohrungen in ein Werkstück 10 einbringen.

Statt den Trägerarm 20 drehbar um das Lager 22 zu lagern kann es auch vorgesehen sein, den Trägerarm 20 an seinem den Antriebsrollen 5 abgewandten Ende fest einzuspannen. Der Trägerarm 20 ist hierbei elastisch ausgebildet, so dass er durch die Stelleinrichtung 30 durchgebogen wird und die Antriebsrollen 5 wie bei der Lagerung des Trägerarms 20 am Lager 22 bewegt werden. Die Verformung des Trägerarms 20 geschieht hierbei rein elastisch und damit reversibel. Die Spannfeder 24 kann in diesem Fall entfallen.

## Patentansprüche

1. Vorrichtung (1) zum elektroerosiven Herstellen von Bohrungen in metallischen Werkstücken (10) mit einem Erodierdraht (3), der mit einer Spannungsquelle (7) verbindbar ist und mit zwei Antriebsrollen (5), zwischen denen der Erodierdraht (3) eingeklemmt ist und durch Drehen der Antriebsrollen (5) vor- und zurückgeschoben werden kann, so dass sich eine Erodierdrahtspitze (103) dem Werkstück (10) annähert oder von diesem entfernt, wobei die Antriebsrollen (5) an einer Haltevorrichtung (12) befestigt sind, **dadurch gekennzeichnet, dass** die Haltevorrichtung (12) mit einer Stelleinrichtung (30) verbunden ist, die einen Piezoaktor (34) umfasst, wobei die Haltevorrichtung (12) durch die Stelleinrichtung (30) derart bewegbar ist, dass die Spitze (103) des Erodierdrahts (3) in Richtung des zu bearbeitenden Werkstücks (10) vor- oder zurückbewegt werden kann.

2. Vorrichtung nach Anspruch 1, **dadurch gekennzeichnet, dass** der Erodierdraht (3) elektrisch mit einer Spannungsquelle (7) kontaktiert ist, wobei die elektrische Kontaktierung über die Antriebsrollen (5) erfolgt.

3. Vorrichtung nach Anspruch 1, **dadurch gekennzeichnet, dass** die Haltevorrichtung (12) einen Trägerarm (20) umfasst, der an einem Ende drehbar um eine Drehachse (22) gelagert ist und an dessen gegenüberliegendem Ende die Antriebsrollen (5) angebracht sind.

4. Vorrichtung nach Anspruch 3, **dadurch gekennzeichnet, dass** die Stelleinrichtung (30) mit dem Trägerarm (20) zwischen dessen Enden verbunden ist.

5. Vorrichtung nach Anspruch 1, **dadurch gekennzeichnet, dass** die Haltevorrichtung (12) einen Trägerarm (20) umfasst, der an seinem Ende fest eingespannt ist und an dessen gegenüberliegendem Ende die Antriebsrollen (5) angebracht sind, wobei der Trägerarm (20) durch die Stelleinrichtung (30) elastisch durchgebogen wird.

6. Vorrichtung nach Anspruch 1, **dadurch gekennzeichnet, dass** die Trägerrollen (5) durch einen Elektromotor angetrieben werden.

## Claims

1. Device (1) for the electro-erosive production of bores in metal workpieces (10), comprising an eroding wire (3), which can be connected to a voltage source (7), and comprising two drive rollers (5), between which the eroding wire (3) is clamped and can be pushed forward and back by turning the drive rollers (5), so that an eroding wire tip (103) approaches the workpiece (10) or is moved away from it, the drive rollers (5) being fastened to a holding device (12), **characterized in that** the holding device (12) is connected to an adjusting device (30), which comprises a piezo actuator (34), the holding device (12) being movable by the adjusting device (30) in such a way that the tip (103) of the eroding wire (3) can be moved forward in the direction of the workpiece (10) to be worked or moved back.

2. Device according to Claim 1, **characterized in that** the eroding wire (3) is in electrical contact with a voltage source (7), the electrical contact being established by way of the drive rollers (5).

3. Device according to Claim 1, **characterized in that** the holding device (12) comprises a supporting arm (20), which is mounted at one end pivotably about a pivot axis (22) and to the opposite end of which the drive rollers (5) are attached.

4. Device according to Claim 3, **characterized in that** the adjusting device (30) is connected to the supporting arm (20) between the ends of the latter.

5. Device according to Claim 1, **characterized in that** the holding device (12) comprises a supporting arm (20), which is firmly clamped at its end and to the opposite end of which the drive rollers (5) are attached, the supporting arm (20) being elastically bent by the adjusting device (30).

6. Device according to Claim 1, **characterized in that** the supporting rollers (5) are driven by an electric motor.

## Revendications

1. Ensemble (1) destiné à former par électroérosion des alésages dans des pièces métalliques (10) et présentant
un fil d'érosion (3) apte à être relié à une source de tension (7) et
deux rouleaux d'entraînement (5) entre lesquels le fil d'érosion (3) est serré et peut être avancé et reculé par rotation des rouleaux d'entraînement (5) de telle sorte qu'une pointe (103) du fil d'érosion puisse être approchée ou éloignée de la pièce (10),
les rouleaux d'entraînement (5) étant fixés sur un dispositif de maintien (12),
**caractérisé en ce que**
l'ensemble de maintien (12) est relié à un dispositif de réglage (30) qui comporte un piézoactionneur (34),
**en ce que** l'ensemble de maintien (12) peut être déplacé par le dispositif de réglage (30) de telle sorte que la pointe (103) du fil d'érosion (3) puisse être avancée en direction de la pièce (10) à traiter ou être éloignée de cette dernière.

2. Ensemble selon la revendication 1, **caractérisé en ce que** le fil d'érosion (3) est en contact électrique avec une source de tension (7), le contact électrique s'effectuant par l'intermédiaire des rouleaux d'entraînement (5).

3. Ensemble selon la revendication 1, **caractérisé en ce que** l'ensemble de maintien (12) présente un bras de support (20) dont une extrémité est montée de manière à pouvoir tourner autour d'un axe de rotation (22) et **en ce que** les rouleaux d'entraînement (5) sont installés à l'extrémité opposée.

4. Ensemble selon la revendication 3, **caractérisé en ce que** le dispositif de réglage (30) est relié au bras de support (20) entre les extrémités de ce dernier.

5. Ensemble selon la revendication 1, **caractérisé en ce que** l'ensemble de maintien (12) présente un bras de support (20) dont une extrémité est immobilisée par serrage, **en ce que** les rouleaux d'entraînement (5) sont installés à l'extrémité opposée et **en ce que** le bras de support (20) est cintré élastiquement par le dispositif de réglage (30).

6. Ensemble selon la revendication 1, **caractérisé en ce que** les rouleaux de support (5) sont entraînés par un moteur électrique.
